## Europäisches Patentamt
## European Patent Office
## Office européen des brevets

(19)

(11) Veröffentlichungsnummer: **0 258 776 B1**

(12) # EUROPÄISCHE PATENTSCHRIFT

(45) Veröffentlichungstag der Patentschrift: **22.01.92**

(21) Anmeldenummer: **87112254.5**

(22) Anmeldetag: **24.08.87**

(51) Int. Cl.⁵: **B60R 16/02**, H01R 11/24, H02H 9/04

(54) **Starthilfekabel.**

(30) Priorität: **02.09.86 AT 2363/86**
**06.07.87 DE 3722286**

(43) Veröffentlichungstag der Anmeldung:
**09.03.88 Patentblatt 88/10**

(45) Bekanntmachung des Hinweises auf die
Patenterteilung:
**22.01.92 Patentblatt 92/04**

(84) Benannte Vertragsstaaten:
**AT BE CH DE ES FR GB GR IT LI LU NL SE**

(56) Entgegenhaltungen:
DE-A- 2 320 075    DE-A- 2 920 979
DE-C- 2 718 188    DE-C- 3 228 471
DE-C- 3 422 995    US-A- 4 163 134

NACHRICHTEN ELEKTRONIK & TELEMATIK
NOT. Band 40, Nr. 5, Mai 1986, Seiten
200-205, Heidelberg, D.

AUTOMATISIERUNGSTECHNISCHE PRAXIS
A.T.P., Band 28, Nr. 2, 1986, Seiten 81-88,
München, D.

ELEKTRONIK, Bank 29, Nr. 26, Dezember

1980, Seiten 51-55, München, D.

(73) Patentinhaber: **system elektrotechnik G. Keller
GmbH
Robert-Bosch-Strasse 5
W-7031 Nufringen(DE)**

(72) Erfinder: **Merio, Raoul, Dipl.-Ing.
Keplerplatz 14
A-1100 Wien(AT)**

(74) Vertreter: **Brehm, Hans-Peter, Dr., Dipl.-Chem.
et al
Patentanwälte Tischer, Kern & Brehm Albert-
Rosshaupter-Strasse 73
W-8000 München 70(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

## Beschreibung

Die Erfindung betrifft ein Starthilfekabel, das eine erste, elektrisch isolierte, flexible Niederspannungsleitung, deren beide Endabschnitte mit je einer ersten, elektrisch isolierten Polzange elektrisch verbunden sind, und das eine zweite, elektrisch isolierte, flexible Niederspannungsleitung aufweist, deren beide Endabschnitte mit je einer zweiten, elektrisch isolierten Polzange elektrisch leitend verbunden sind.

Bekannte, herkömmliche Starthilfekabel dieser Art (vgl. etwa DIN 72 553 in der Fassung des Entwurfs vom Februar 1987) sind zum Einsatz an Kraftfahrzeugen mit Verbrennungsmotor bestimmt und dienen der vorübergehenden Übertragung der zum Starten notwendigen elektrischen Energie von einer Fremdbatterie.

Das Dokument US-A-4,163,134 offenbart ein Sicherheits-Starthilfekabel, das die Probleme der Funkenbildung lösen soll, die dann auftreten können, wenn die Polzangen mit den Batterieanschlußstopfen verbunden oder davon gelöst werden. Es wird vorgeschlagen, in wenigstens eine der elektrisch isolierten, flexiblen Niederspannungsleitungen einen Schalter einzusetzen, der sich in einer hermetisch dichten Ummantelung oder Kapselung befindet. Ersichtlich werden die Funkenbildung und die zugrundeliegenden induktiven Spannungsspitzen nicht beseitigt, sondern in einen geschützten, hermetisch gekapselten Bereich verlegt.

Eine weitere Ausführungsform des bekannten Sicherheits-Starthilfekabels weist zusätzlich eine logische Schaltungseinrichtung auf, die unabhängig von der tatsächlich vorgenommenen Verbindung zwischen Polklemmen und Batterieanschlußstopfen gewährleistet, daß immer nur Batterieanschlußstopfen gleicher Polarität über die elektrischen Niederspannungsleitungen miteinander verbunden werden. Im einzelnen weist dieses bekannte Sicherheits-Starthilfekabel eine erste, nicht durch einen Schalter unterbrochene Niederspannungsleitung auf. Die zweite Niederspannungsleitung ist durch einen relaisbetätigten Schalter unterbrochen und besteht aus zwei Niederspannungsleitungsabschnitten. Zwischen die erste Niederspannungsleitung und den ersten Abschnitt ist ein erster Brückengleichrichter eingesetzt. Zwischen die erste Niederspannungsleitung und den zweiten Abschnitt ist ein zweiter Brückengleichrichter eingesetzt. Jeder Brückengleichrichter besteht aus vier Stromrichtungsbegrenzungseinrichtungen (typischerweise Dioden) und einem Widerstand, der notwendigerweise so bemessen sein muß, daß er sämtliche über die erste Niederspannungsleitung fließende Ströme sperrt. Die Anordung der vier Strombegrenzungseinrichtungen ist derart, daß bei bestimmungsgemäßem Gebrauch niemals ein Strom von der ersten Niederspannungsleitung über einen Brückengleichrichter zum Leiterabschnitt der zweiten Niederspannungsleitung fließen kann. Der Brückengleichrichter bildet keine "elektrisch leitende Verbindung" zwischen den beiden Niederspannungsleitungen dieses bekannten Sicherheits-Starthilfekabels.

Aus den deutschen Patentschriften 27 18 188 und 32 28 471 sind Überspannungsschutzgeräte zur Ableitung von Blitzströmen bekannt, mit einem Varistor und einem dazu elektrisch parallel geschalteten Überspannungsableiter, der eine Blitzstromtragfähige Luft-Funkenstrecke aufweist. Ferner offenbart die deutsche Offenlegungsschrift 29 20 979 eine Überspannungsschutzeinrichtung zum Schutz von Niederspannungsanlagen mit einem Metalloxidvaristor und einem dazu parallel geschalteten Überspannungsableiter, der eine Luft-Funkenstrecke aufweist. Solche Überspannungsschutzeinrichtungen sind bislang nicht in Verbindung mit Starthilfekabeln eingesetzt worden.

Seit vielen Jahren enthalten Kraftfahrzeuge elektronische Anlagen und Bauteile, beispielsweise in der Zündelektronik und/oder in Kraftstoff-Einspritzeinrichtungen. Auch die in jüngerer Zeit entwickelten Antiblockiersysteme und Antischlupfsysteme enthalten in erheblichem Umfang elektronische Komponenten.

Im Rahmen der vorliegenden Erfindung ist festgestellt worden, daß beim Gebrauch herkömmlicher Starthilfekabel erhebliche induktive Spannungsspitzen auftreten können. Insbesondere, wenn als Fremdbatterie die Starterbatterie eines Kraftfahrzeuges mit laufendem Motor dient, der Starthilfevorgang erfolgreich war und nunmehr die Polzangen von den Batterieklemmen gelöst werden müssen, können bei der ersten Entfernung einer Polzange kurzzeitig hohe Spitzenspannungen auftreten, die mit einer erheblichen Funkenbildung verbunden sind. Im Bereich von Mikro- und Millisekunden können Spannungen bis zu über 1.000 Volt auftreten, welche eine ernsthafte Gefahr für die hochwertigen Bauteile und Komponenten moderner Fahrzeugelektronik darstellen.

Die Aufgabe der vorliegenden Erfindung besteht darin, ein Starthilfekabel bereitzustellen, das weiterhin universell bei den verschiedensten Kraftfahrzeugtypen einsetzbar ist, das jedoch bei Durchführung eines Starthilfevorgangs das Auftreten hoher Spitzenspannungen, welche die Fahrzeugelektronik beeinträchtigen könnten, sicher vermeidet.

Ausgehend von einem Starthilfekabel herkömmlicher Bauart mit den oben aufgezeigten Merkmalen ist die erfindungsgemäße Lösung dieser Aufgabe dadurch gekennzeichnet, daß wenigstens eine elektrisch leitende Verbindung zwischen der ersten und der zweiten Niederspannungsleitung und/oder zwischen deren ersten und zweiten Polzangen vorhanden ist, und in diese elektrisch leitende Verbindung wenigstens ein spannungsabhängiger Widerstand eingesetzt ist, dessen Durchlaßspannung oberhalb der Betriebsspannung herkömmlicher Starterbatterien für Kraftfahrzeuge liegt. Vorzugsweise liegt diese Durchlaßspannung wenigstens 20 bis 60 Volt über der Batterie-Betriebsspannung.

Als elektrisch leitende Verbindung kann vorzugsweise eine dritte, elektrisch isolierte, flexible Leitung vorgesehen sein. Alternativ kann die elektrisch leitende Verbindung lediglich aus den beiden Anschlußabschnitten bestehen, über welche jeder spannungsabhängige Widerstand einerseits mit der ersten Niederspannungsleitung und andererseits mit der zweiten Niederspannungsleitung elektrisch leitend verbunden ist.

Als spannungsabhängige Widerstände kommen beispielsweise Varistoren, insbesondere Metalloxid-Varistoren und eine analog wirkende Anordnung von Schaltungselementen in Betracht. Zu solchen analog wirkenden Anordnungen von Schaltungselementen gehören beispielsweise zwei antiparallel geschaltete Z-Dioden, Thyristoren oder eine Anordnung mit zwei antiparallel geschalteten Thyristoren (Triac). Vorzugsweise dient als spannungsabhängiger Widerstand eine parallel geschaltete Anordnung eines Metallvaristors und eines gasgefüllten Überspannungsableiters. Die Durchlaßspannung des Metalloxidvaristors liegt vorzugsweise im Bereich von etwa 40 bis 60 Volt, und der gasgefüllte Überspannungsableiter weist eine Durchlaß- bzw. Ansprechspannung von 90 Volt und mehr auf, so daß insbesondere bei Auftreten hoher Spannungsspitzen der gasgefüllte Überspannungsableiter als Schutzanordnung für den Metalloxid-Varistor dient.

Das erfindungsgemäße Starthilfekabel mit elektronischer Schutzschaltung ist gut geeignet für die typischerweise verwendeten 12- und 24-Volt-Starterbatterien in herkömmlichen Kraftfahrzeugen mit Otto- und Diesel-Motoren.

Die sicherheitstechnischen Anforderungen an Starthilfekabel sind beispielsweise in DIN 72 553 (in der Fassung des Entwurfs vom Februar 1987) angegeben.

Die Niederspannungsleitungen weisen typische Leiterquerschnitte von 16, 25 oder 35 mm² auf. Das Leitermaterial und das Isoliermaterial sind für einen Temperatur-Einsatzbereich von -25°C bis +70°C ausgelegt; noch bei -25°C muß sich das Starthilfekabel aus einem ringförmig aufgewickelten Zustand in den bei der Starthilfe notwendigen, gestreckten Zustand bringen lassen. Die Polzangen sind vorzugsweise vollisoliert; das heißt, mit einer geschlossenen, nicht angeklemmten Polzange darf kein Kontakt beim Berühren elektrisch leitender Flächen oder einer anderen Polzange entstehen.

Solche vollisolierten Polzangen bestehen vorzugsweise aus zwei Schalenabschnitten aus Kunststoff, in deren Klemmstücke je eine metallische Klemmbacke eingesetzt ist, an welche je ein Endabschnitt einer Niederspannungsleitung elektrisch leitend angeschlossen ist. Alternativ können - insbesondere für den Export bestimmte - Polzangen aus einer Zange aus Stahlblech oder dergleichen bestehen, bei welcher lediglich die Griffstücke mit einer Hülle aus Kunststoff elektrisch isoliert sind.

Der in der elektronischen Schutzschaltung des erfindungsgemäßen Starthilfekabels vorgesehene spannungsabhängige Widerstand hat die Funktion eines "spannungsabhängigen Schalters". Unterhalb seiner Durchlaßspannung sperrt dieser spannungsabhängige Widerstand bzw. Schalter die elektrisch leitende Verbindung, so daß beim normalen Starthilfevorgang , bei dem typischerweise Spannungen bis maximal etwa 30 Volt auftreten können, kein Stromfluß über die elektrisch leitende Verbindung erfolgt und damit trotz des Vorhandenseins einer elektrisch leitenden Verbindung ein Kurzschluß zwischen der ersten und zweiten Niederspannungsleitung sicher ausgeschlossen ist. Oberhalb seiner Durchlaßspannung, die vorzugsweise im Bereich von etwa 40 bis 60 Volt liegt, nimmt der elektrische Widerstand des spannungsabhängigen Widerstandselementes oder einer analog wirkenden Anordnung von Schaltungselementen rasch ab, so daß beim Auftreten höherer Spannungen ein Stromfluß über die elektrisch leitende Verbindung erfolgen kann. Die den kurzzeitigen Spannungsspitzen entsprechenden Ströme werden damit über die elektrisch leitende Verbindung zwischen der ersten und zweiten Niederspannungsleitung kurzgeschlossen und können die hochwertigen Bauteile der Fahrzeugelektronik nicht beeinträchtigen.

Vorzugsweise gehören zu dem erfindungsgemäßen Starthilfekabel zwei elektrisch leitende Verbindungen, in welche wenigstens je ein spannungsabhängiger Widerstand eingesetzt ist. Auch hier dient als spannungsabhängiger Widerstand vorzugsweise eine elektrisch parallel geschaltete Anordnung eines Varistors, insbesondere Metalloxid-Varistors, mit einem gasgefüllten Überspannungsableiter.

Die elektrisch leitende Verbindung kann vorzugsweise als eine dritte, elektrisch isolierte, flexible Leitung ausgebildet sein, welche elektrisch leitend mit der ersten Niederspannungsleitung und mit der zweiten Niederspannungsleitung und/oder mit deren erster Polzange und mit deren zweiter Polzange verbunden ist.

Der Leiterquerschnitt einer solchen dritten Leitung ist deutlich kleiner als der Leiterquerschnitt der Niederspannungsleitungen, die typischerweise Leiterquerschnitte von 16, 25 oder 35 mm² aufweisen. Demgegenüber weisen die dritte(n) Leitung-

(en) vorzugsweise einen Leiterquerschnitt im Bereich von etwa 2 bis 8 mm² auf, um bei Beendigung eines Starthilfevorgangs die Selbstinduktion innerhalb dieser dritten Leitung(en) möglichst gering zu halten.

Die Endabschnitte bzw. Anschlußkontakte jeder dritten Leitung sind elektrisch leitend mit der ersten bzw. mit der zweiten Niederspannungsleitung verbunden. Vorzugsweise befindet sich die Verbindung nahe benachbart zu den beiden benachbarten Endabschnitten der ersten und der zweiten Niederspannungsleitung. Besonders bevorzugt greifen die Anschlußkontakte jeder dritten Leitung unmittelbar an den elektrisch leitenden, metallischen Teilen der ersten und zweiten Polzangen an, die an den benachbarten Endabschnitten der ersten und der zweiten Niederspannungsleitung elektrisch leitend angebracht sind. Auch diese Anordnung trägt zur Verminderung der Selbstinduktion bei.

Die Länge jeder dritten Leitung soll einerseits kurz sein, um die Selbstinduktion gering zu halten, und andererseits ausreichend lang sein, um eine ungehinderte Handhabung und universelle Anwendung des Starthilfekabels auch dann zu gewährleisten, wenn die erste und zweite Polzange an den beiden benachbarten Enden der ersten und der zweiten Niederspannungsleitungen über eine solche dritte Leitung miteinander verbunden sind. In einem solchen Falle hat sich eine Länge von etwa 60 bis 100 cm, insbesondere von etwa 80 cm für jede dritte Leitung gut bewährt und wird vorzugsweise vorgesehen, weil damit auch der Abstand zwischen den Polklemmen vielzelliger Starterbatterien für Lastkraftwagen ohne weiteres überbrückt werden kann, und eine bequeme Handhabung gewährleistet ist.

Für die Isolierung der dritten Leitung(en) kommen die typischen flexiblen Isoliermittel in Betracht, wie sie für die Niederspannungsleitungen herkömmlicher Starthilfekabel eingesetzt werden. Der Isolierstoff soll schwer entzündbar sein und wenigstens im Temperaturbereich von -25°C bis +70°C flexibel sein. Der Isolierstoff muß gegen Schmiermittel und Kraftstoff beständig sein.

Die Anordnung des spannungsabhängigen Widerstandes erfolgt vorzugsweise etwa mittig zwischen den beiden "äußeren" Anschlußkontakten einer dritten Leitung. Es ist eine solche Anordnung und Verbindung zwischen den zum Widerstand benachbarten "inneren" Anschlußkontakten der dritten Leitung(en) und dem spannungsabhängigen Widerstand vorgesehen, daß ein durch die dritte Leitung fließender Strom notwendigerweise den spannungsabhängigen Widerstand passieren muß. Sofern einer dritten Leitung zwei oder im Einzelfalle auch noch mehr spannungsabhängige Widerstände zugeordnet sind, ist eine parallele Schaltung bzw. Anordnung sämtlicher spannungsabhängiger Widerstände untereinander vorgesehen, so daß wenigstens ein Widerstand als Schutzanordnung für einen weiteren Widerstand dienen kann.

Nach einer alternativen Ausführungsform der Erfindung kann jede elektisch leitende Verbindung zwischen der ersten und der zweiten Niederspannungsleitung lediglich aus den beiden Anschlußabschnitten bestehen, über welche jeder spannungabhängige Widerstand einerseits mit der ersten Niederspannungsleitung und andererseits mit der zweiten Niederspannungsleitung elektrisch leitend verbunden ist. Beispielsweise können die entsprechenden Abschnitte der ersten und zweiten Niederspannungsleitung mechanisch fixiert innerhalb eines Gehäuses angeordnet sein, in dem sich wenigstens ein spannungsabhängiger Widerstand befindet, dessen Durchlaßspannung oberhalb der Betriebsspannung herkömmlicher Starterbatterien liegt. Dieser spannungsabhängige Widerstand ist über seinen einen Anschlußabschnitt elektrisch leitend mit der ersten Niederspannungsleitung verbunden und mit seinem anderen Anschlußabschnitt elektrisch leitend mit der zweiten Niederspannungsleitung verbunden. Diese Anschlußabschnitte können beispielsweise als Leiterbahnabschnitte einer Leiterplatte ausgebildet sein, an welchen die beiden Niederspannungsleitungen mittels Klemmen oder dergleichen festgelegt sind, und auf welcher wenigstens ein spannungsabhängiger Widerstand angeordnet oder ausgebildet ist. Ferner können diese Anschlußabschnitte die Kontakte einer herkömmlichen Schneidklemmvorrichtung sein, welche die Isolierung der Niederspannungsleitung durchdringen und deren Kupferader kontaktieren. Weiterhin kann jeder Anschlußabschnitt in Form eines Kontaktstiftes ausgebildet sein, der im Gehäuse eingespritzt ist und beim Schließen des Gehäuses einen elektrisch leitenden Kontakt zu den Adern der Niederspannungsleitungen herstellt.

Vorzugsweise sind auch bei dieser alternativen Ausführungsform zwei Gehäuse vorgesehen, die sich etwa in einem Abstand von etwa 40 bis 60 cm entfernt zu den jeweiligen Polzangen befinden, wobei die beiden Niederspannungsleitungen in diese Gehäuse führen, dort mechanisch festgelegt sind, und innerhalb dieser Gehäuse beispielsweise ein Varistor, insbesondere Metalloxid-Varistor, und ein gasgefüllter Überspannungsableiter angeordnet sind, die - in elektrisch paralleler Schaltung - über entsprechende Anschlußabschnitte sowohl mit der ersten Niederspannungsleitung wie mit der zweiten Niederspannungsleitung elektrisch leitend verbunden sind.

Zur Schutzschaltung des erfindungsgemäßen Starthilfekabels gehört wenigstens ein spannungsabhängiger Widerstand, dessen Durchlaßspannung ca. 20 bis 60 Volt oberhalb der Betriebsspannung herkömmlicher Starterbatterien für Kraftfahrzeuge liegt. Vorzugsweise ist ein spannungsabhängiger Widerstand mit einer Durchlaßspannung von etwa 40 bis 60 Volt vorgesehen; besonders bevorzugt soll die Durchlaßspannung etwa 40 Volt betragen. Ein solcher Widerstand soll ein flinkes Ansprechverhalten besitzen, so daß auch kurzfristige Spannungsspitzen, deren Dauer lediglich einige Mikrosekunden beträgt, sicher über diesen Widerstand hinweg abgeleitet werden. Das Ansprechverhalten des spannungsabhängigen Widerstandes soll deshalb im Mikrosekunden-Bereich und vorzugsweise im Nanosekunden-Bereich liegen.

Starthilfekabel sind für eine lange Lebensdauer von zehn und mehr Jahren ausgelegt. Der spannungsabhängige Widerstand muß wiederholt belastbar sein, wobei Spannungen bis zu über 1.000 Volt auftreten können. Die Ströme betragen in der Regel nicht mehr als 1 Milliampere. Auch durch mehrmalige Belastung darf sich die Strom-Spannungskennlinie des Widerstandes nicht ändern, insbesondere nicht niederohmiger werden, um einen Leckstrom bereits bei einer typischen Betriebsspannung einer herkömmlichen 24-Volt-Starterbatterie sicher auszuschließen. Herkömmliche, handelsüblich zugängliche Varistoren, insbesondere Metalloxid-Varistoren, genügen diesen Anforderungen oder können diesen Anforderungen gemäß ausgewählt werden.

Anstelle eines Varistors kann die erfindungsgemäß vorgesehene Schutzschaltung auch andere, analog wirkende Anordnungen aus elektronischen Bauteilen und Komponenten aufweisen. Hierzu gehört beispielsweise eine antiparallele Anordnung von zwei Z-Dioden. Solche Z-Dioden sind mit genau definierter Durchlaßspannung verfügbar und besitzen ein außerordentlich flinkes Ansprechverhalten im Nanosekundenbereich. Weiterhin können als spannungsabhängige Widerstände bzw. "spannungsabhängige Schalter" Thyristoren verwendet werden. Solche Thyristoren können bei vergleichsweise kleiner Baugröße besonders hohe Leistungen aufnehmen. Bei ausreichend bemessenem Thyristor kann auf eine zusätzliche Schutzanordnung verzichtet werden. Der Steuerstrom für die Zusatzschaltung des Thyristors kann aus dem Spannungsimpuls entnommen werden. Vorteilhaft kann auch eine Anordnung mit zwei antiparallel geschalteten Thyristoren, eine sogen. Triac-Schaltung, verwendet werden.

Die erfindungsgemäß vorgesehene Schutschaltung kann zusätzlich zu dem oben definierten, spannungsabhängigen Widerstand mit einer Durchlaßspannung von etwa 40 bis 60 Volt und einem flinken Ansprechverhalten im Nano- oder Mikrosekundenbereich eine Schutzanordnung aufweisen, welche diesen Widerstand vor höheren Strom-/Spannungseinwirkungen schützt. Als eine solche Schutzanordnung kommt insbesondere ein gasgefüllter Überspannungsableiter in Betracht. Die Ansprech- bzw. Durchlaßspannung des Überspannungsableiters liegt höher als die Durchlaßspannung des spannungsabhängigen Widerstandes, insbesondere des Metalloxid-Varistors, und soll vorzugsweise wenigstens 90 Volt betragen. Auch der Überspannungsableiter soll ein flinkes Ansprechverhalten aufweisen, das wenigstens im Mikrosekundenbereich liegt.

Es ist eine Parallelschaltung eines solchen spannungsabhängigen Widerstandes und dessen Schutzanordnung, also beispielsweise eines Metalloxid-Varistors und eines gasgefüllten Überspannungsableiters, vorgesehen. Die Vorteile solcher Überspannungsschutzeinrichtungen mit Parallelschaltung von Varistor und Funkenstrecke sind in der Fachwelt bekannt und beispielsweise auch in den eingangs genannten Patentpublikationen - wie DE-OS 29 20 979, DE-PS 27 18 188 oder DE-PS 32 28 471 - angegeben, so daß weitere Ausführungen hierzu nicht erforderlich sind.

Der spannungsabhängige Widerstand und die wahlweise vorgesehene Schutzanordnung für diesen Widerstand sind vorzugsweise auf einer Leiterplatte, einer Montagehilfe oder einem sonstigen Träger dauerhaft angebracht, an der bzw. dem auch die inneren Anschlußkontakte der beiden Leiterabschnitte der dritten Leitung enden, die zur ersten bzw. zweiten Niederspannungsleitung führen. Vorzugsweise ist eine mechanisch feste Anbringung dieser Leiterabschnitte an der Leiterplatte, der Montagehilfe oder dem sonstigen Träger mittels Anschlußschellen, Klemmen oder dergleichen vorgesehen, um eine weitestgehend zugfeste Anordnung zu schaffen.

Benachbart zu jedem spannungsabhängigen Widerstand kann eine Kühlklemme oder sonstiger Wärmeableiter vorgesehen werden, die bzw. der vorzugsweise ebenfalls an der Leiterplatte, der Montagehilfe oder dem sonstigen Träger befestigt ist.

Die gesamte Anordnung aus Träger, spannungsabhängigem Widerstand, Anschlußkontakten der dritten Leitung oder Anschlußabschnitten des Widerstandes und wahlweise vorgesehener Schutzanordnung sowie Kühlklemme oder dergleichen ist vorzugsweise in wasser-, kraftstoff- und schmiermittelbeständigem Kunststoff eingebettet oder eingekapselt. Innerhalb des so erhaltenen Gehäuses sind je ein Abschnitt der beiden Niederspannungsleitungen vorzugsweise mechanisch an dem Träger oder dergleichen fixiert. Das Kunststoffmaterial des Gehäuses ist dicht mit dem Isoliermaterial der Niederspannungsleitungen und/oder mit der wahlweise dritten Leitung verbunden, beispielsweise verschweißt oder verklebt. Es wird eine dauerhafte, robuste und stabile Anordnung erhalten, welche über viele Jahre den typischerweise rauhen Einsatzbedingungen eines Starthilfekabels standhält.

Nachstehend wird die Erfindung mehr im einzelnen anhand bevorzugter Ausführungsformen mit Bezugnahme auf die Zeichnungen erläutert; die letzteren zeigen:

Fig. 1    in schematischer Darstellung die Bestandteile eines herkömmlichen Starthilfekabels;

Fig. 2    in schematischer Darstellung eine erste Ausführungsform eines erfindungsgemäßen Starthilfekabels mit einer elektrisch leitenden Verbindung in Form einer dritten Leitung, in welche ein spannungsabhängiger Widerstand eingesetzt ist;

Fig. 3    schematisch und ausschnittsweise eine weitere Ausführungsform eines erfindungsgemäßen Starthilfekabels mit zwei dritten Leitungen, in die je eine parallel geschaltete Anordnung eines spannungsabhängigen Widerstandes und eines gasgefüllten Überspannungsableiters eingesetzt ist;

Fig. 4    schematisch eine praktische Ausführungsform eines erfindungsgemäßen Starthilfekabels, bei welchem die elektrisch leitenden Verbindungen lediglich aus den Anschlußabschnitten jedes spannungsabhängigen Widerstandes bestehen;

Fig. 5    in perspektivischer, auseinandergezogener, teilweise gebrochener Darstellung eine vollisolierte Polzange, an deren metallischer Klemmbacke sowohl der Endabschnitt einer Niederspannungsleitung wie der Endabschnitt einer dritten Leitung elektrisch leitend angebracht sind;

Fig. 6    schematisch eine weitere, praktische Ausführungsform eines erfindungsgemäßen Starthilfekabels und

Fig. 7    die praktische Anwendung des Starthilfekabels nach Fig. 6.

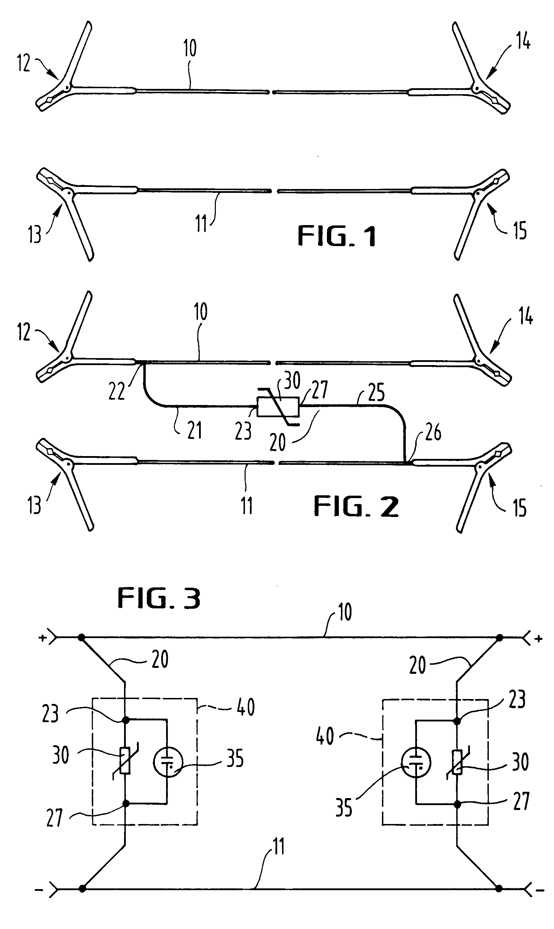

Fig. 1 zeigt schematisch die Bestandteile eines herkömmlichen Starthilfekabels. Zu diesen Bestandteilen gehört eine erste Niederspannungsleitung 10, an deren beiden Leitungsenden je eine erste, elektrisch isolierte Polzange 12 und 14 angebracht ist. Weiterhin gehört zu diesen Bestandteilen eine zweite Niederspannungsleitung 11, an deren beiden Leitungsenden je eine zweite, elektrisch isolierte Polzange 13 und 15 elektrisch leitend angebracht ist. Hinsichtlich weiterer Einzelheiten eines solchen herkömmlichen Starthilfekabels und dessen sicherheitstechnischer Festlegungen wird auf DIN 72 553 in der Fassung des Entwurfs vom Februar 1987 verwiesen.

Die Fig. 2 zeigt schematisch eine erste Ausführungsform eines erfindungsgemäßen Starthilfekabels. Zusätzlich zu den oben genannten Bestandteilen 10 bis 15 ist eine elektrisch leitende Verbindung vorhanden, im vorliegenden Fall in Form einer dritten Leitung 20, in welche ein spannungsabhängiger Widerstand 30, beispielsweise ein Metalloxid-Varistor oder eine Triac-Schaltung von Thyristoren eingesetzt ist. Diese dritte Leitung 20 besteht aus zwei Leitungsabschnitten 21 und 25. Der Endabschnitt 22 des einen Leitungsabschnittes 21 ist elektrisch leitend mit der ersten Niederspannungsleitung 10 verbunden. Der Anschlußkontakt 23 dieses Leitungsabschnittes 21 ist elektrisch leitend mit der einen Seite des spannungsabhängigen Widerstandes 30 verbunden. Der Anschlußkontakt 27 des anderen Leitungsabschnittes 25 ist mit der anderen Seite des spannungsabhängigen Widerstandes 30 elektrisch leitend verbunden. Der Endabschnitt 26 dieses Leitungsabschnittes 25 ist elektrisch leitend mit der zweiten Niederspannungsleitung 11 verbunden.

Der spannungsabhängige Widerstand 30 weist typischerweise eine Durchlaßspannung von etwa 40 Volt auf. Treten beim typischen Gebrauch des Starthilfekabels insbesondere beim Abklemmen der Polzangen von den Batterieklemmen Spannungsspitzen mit einer deutlich höheren Spannung auf, so kann ein Stromfluß über die dritte Leitung 20 und den spannungsabhängigen Widerstand 30 zwischen der ersten Niederspannungsleitung 10 und der zweiten Niederspannungsleitung 11 erfolgen, so daß diese Spannungsspitzen abgebaut und unschädlich gemacht werden, bevor sie Komponenten der wertvollen Fahrzeugelektronik beeinträchtigen könnten.

Die Fig. 3 zeigt schematisch einen Ausschnitt einer weiteren Ausführungsform eines erfindungsgemäßen Starthilfekabels. Hier besteht die elektronische Schutzschaltung aus je zwei dritten Leitungen 20, in welche - parallel geschaltet -je ein spannungsabhängiger Widerstand 30 und ein gasgefüllter Überspannungsableiter 35 eingesetzt sind. Die eine dritte Leitung 20 verbindet die erste Niederspannungsleitung 10 mit der zweiten Niederspannungsleitung 11 nahe benachbart zu deren beiden, im Gebrauch am gleichen Fahrzeug bzw. an dessen Starterbatterie angebrachten - nicht dargestellten - Polzangen. Die andere dritte Leitung 20 verbindet ebenfalls die erste Niederspannungsleitung 10 mit der zweiten Niederspannungsleitung 11 nahe benachbart zu deren beiden anderen, im Gebrauch am anderen Fahrzeug bzw. dessen Starterbatterie angebrachten - nicht dargestellten - Polzangen. In der dargestellten Ausführungsform handelt es sich bei den beiden spannungsabhängigen Widerständen 30 um Metalloxid-Varistoren, deren Durchlaßspannung etwa 40 Volt beträgt. Der gasgefüllte Überspannungsableiter 35 weist eine Ansprech- bzw. Durchlaßspannung von wenigstens 90 Volt auf und hält kurzfristigen Stromstössen von mehreren Kiloampere stand. Dieser Überspannungsableiter 35 schaltet im Mikrosekundenbereich und schützt somit den Metalloxid-Varistor 30 vor zu großen Stromeinwirkungen. Überspannungsableiter 35 dieser Bauart sind handelsüblich zugänglich.

Wie schematisch in Fig. 3 angedeutet, können sich der Metalloxid-Varistor 30, der gasgefüllte Überspannungsableiter 35 und die Anschlußkontakte 23 und 27 der dritten Leitungen 20 auf einer Leiterplatte, einer Montagehilfe oder einem sonstigen Träger befinden, die innerhalb eines gekapselten Gehäuses 40 untergebracht sind, das schematisch mit gestrichelten Linien angedeutet ist.

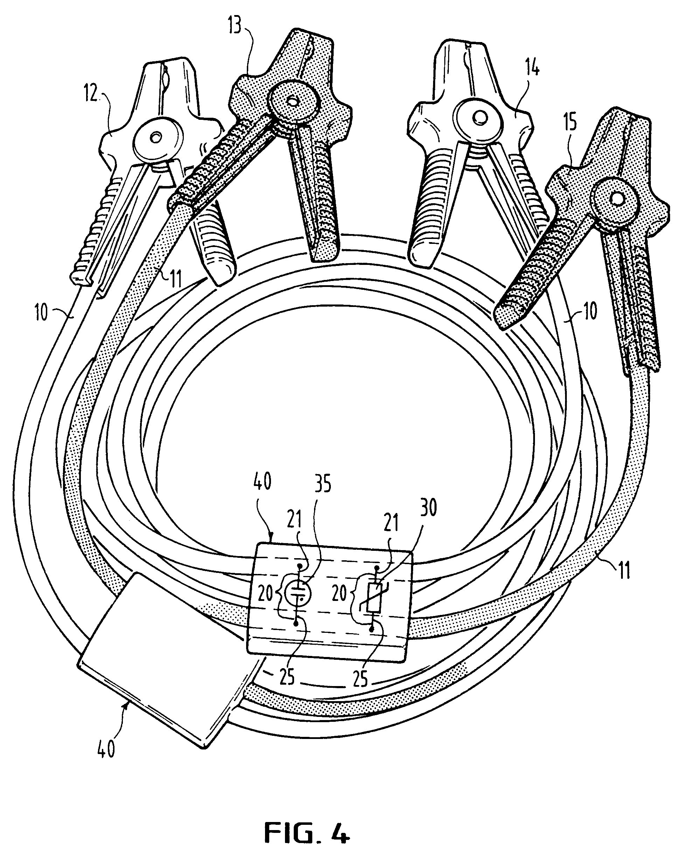

Die Fig. 4 zeigt eine praktische Ausführungsform eines erfindungsgemäßen Starthilfekabels, dessen elektronische Schutzschaltung zwei übereinstimmende Vorrichtung aufweist. Jede Vorrichtung befindet sich in einem Abstand von etwa 40 bis 60 cm zu zwei benachbarten Polzangen 12, 13 oder 14, 15 und umfaßt ein Gehäuse 40, durch welches Abschnitte der ersten Niederspannungsleitung 10 und der zweiten Niederspannungsleitung 1 hindurchführen. Über - nicht dargestellte - Klemmen besteht eine mechanisch feste Verbindung zwischen dem Gehäuse 40 und den Abschnitten der beiden Niederspannungsleitungen 10 und 11. Innerhalb jedes Gehäuses 40 befindet sich auf einer - nicht dargestellten -Leiterplatte oder einem sonstigen Träger ein Metalloxid-Varistor 30 und ein gasgefüllter Überspannungsableiter 35. Sowohl der Metalloxid-Varistor 30 wie der Überspannungsableiter 35 sind über je einen Anschlußabschnitt 21 elektrisch leitend mit der ersten Niederspannungsleitung 10 und über je einen weiteren Anschlußabschnitt 25 elektrisch leitend mit der zweiten Niederspannungsleitung 11 verbunden. Die einem bestimmten spannungsabhängigen Widerstand 30,35 zugeordneten Anschlußabschnitte 21 und 25 bilden zusammen eine elektrisch leitende Verbindung 20, in welche dieser Widerstand 30 bzw. 35 eingesetzt ist. Jeder Anschlußabschnitt 21, 25 kann als Leiterbahnabschnitt auf einer Leiterplatte, als Kontakt einer Schneidklemmvorrichtung, als Kontaktstift oder als sonstiges Klemmelement ausgebildet sein.

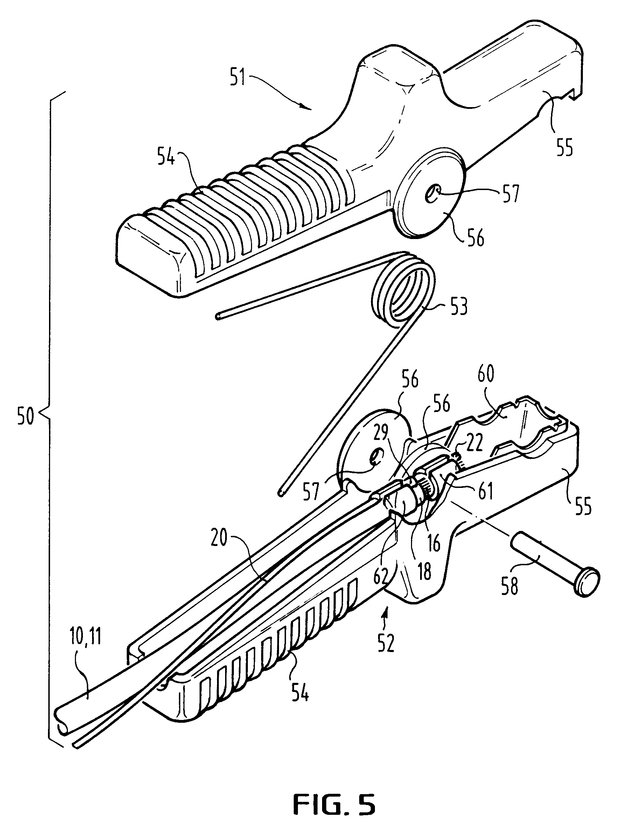

Die Fig. 5 zeigt eine bevorzugte Ausführungsform der Anbringung einer dritten Leitung an der metallischen Klemmbacke in einer Polzange, an welche eine Niederspannungsleitung elektrisch leitend angeklemmt ist.

Sämtliche Polzangen 12 bis 15 weisen einen übereinstimmenden, vorzugsweise vollisolierten Aufbau auf, der nachstehend mit Bezugnahme auf Fig. 5 anhand der Polzange 50 erläutert wird. Diese Polzange 50 besteht im wesentlichen aus zwei Schalenabschnitten 51 und 52 und einer Feder 53. Jeder Schalenabschnitt 51, 52 besteht aus einem formstabilen, elektrisch nicht leitenden Kunststoff, wie etwa Polyethylen, Polypropylen oder Polyamid und weist ein Griffstück 54, ein Klemmstück 55 und zwei Lagerscheiben 56 auf. Im Mittelpunkt der beiden Lagerscheiben 56 sind Bohrungen 57 ausgespart, durch welche im zusammengebauten Zustand ein Bolzen 58 geführt ist, der als Lager und Halterung für die Feder 53 dient, deren endständige Schenkel innerhalb des Griffstückes 54 jedes Schalenabschnittes 51 und 52 anliegen und deren Federspannung die Klemmstücke 55 ständig zusammenzudrücken sucht.

Innerhalb jedes aus Kunststoff bestehenden Klemmstückes 55 ist eine metallische Klemmbacke 60 festgelegt. An der Klemmbacke 60 befinden sich zwei metallische Klemmen 61 und 62. Die eine Klemme 61 umgreift die parallel zueinander angeordneten abisolierten Leiter 16 der Niederspannungsleitungen 10,11 und den abisolierten Anschlußkontakt 22 der dritten Leitung 20. Durch mechanisch festes Zusammenquetschen der Schenkel dieser Klemme 61 wird ein guter elektrischer Kontakt zwischen den Leitern 17,22 und der restlichen Metallbacke 60 geschaffen. Die zweite Klemme 62 umgreift die Isolierung 18 der Niederspannungsleitungen 10,11 und die Isolierung 29 der dritten Leitung 20. Durch ausreichendes Zusammendrükken der Schenkel der zweiten Klemmme 62 wird eine zugfeste Verbindung der Niederspannungsleitungen 10,11 und der dritten Leitung 20 mit der metaillischen Klemmbacke 60 und damit mit der Polzange 50 geschaffen.

Der unmittelbare Anschluß des Endabschnittes bzw. Anschlußkontaktes 22 der dritten Leitung 20 an der metallischen Klemmbacke 60 einer Polzange 50 vermindert die Selbstinduktion auf ein Minimum.

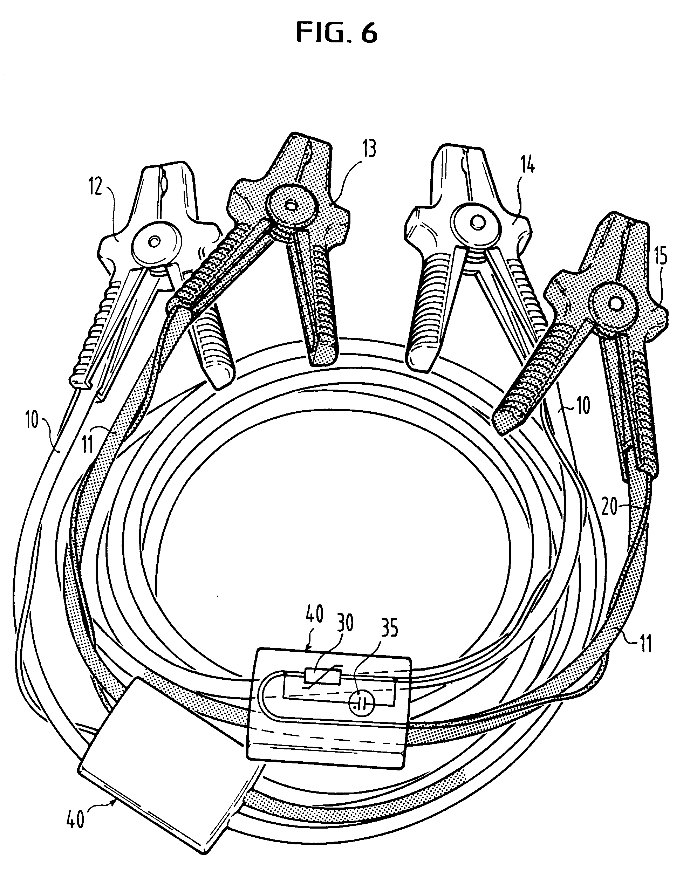

Die Fig. 6 zeigt eine weitere praktische Ausführungsform eines erfindungsgemäßen Starthilfekabels mit elektronischer Schutzschaltung.

Die beiden ersten Polzangen 12 und 14 sind über eine erste Niederspannungsleitung 10 elektrisch leitend miteinander verbunden. Die beiden zweiten Polzangen 13 und 15 sind über eine zweite Niederspannungsleitung 11 elektrisch leitend miteinander verbunden. Je eine dritte Leitung 20 verbindet die erste Niederspannungsleitung 10 elektrisch leitend mit der zweiten Niederspannungsleitung 11. Die Verbindung kann vorzugsweise durch gemeinsames Anklemmen der Kupferadern der Niederspannungsleitungen 10 bzw. 11 und der dritten Leitung 20 an einer metallischen Klemmbacke in jeder Polzange 12,13,14,15 erfolgen, wie das oben mit Bezug auf Fig. 5 erläutert ist.

In jede dritte Leitung 20 ist eine parallele Anordnung eines Metalloxid-Varistors 30 und eines gasgefüllten Überspannungsableiters 35 eingesetzt. Jede dieser Anordnungen befindet sich innerhalb eines Gehäuses 40, das auch entsprechende Abschnitte der beiden Niederspannungsleitungen 10 und 11 im Klemmsitz umschließt.

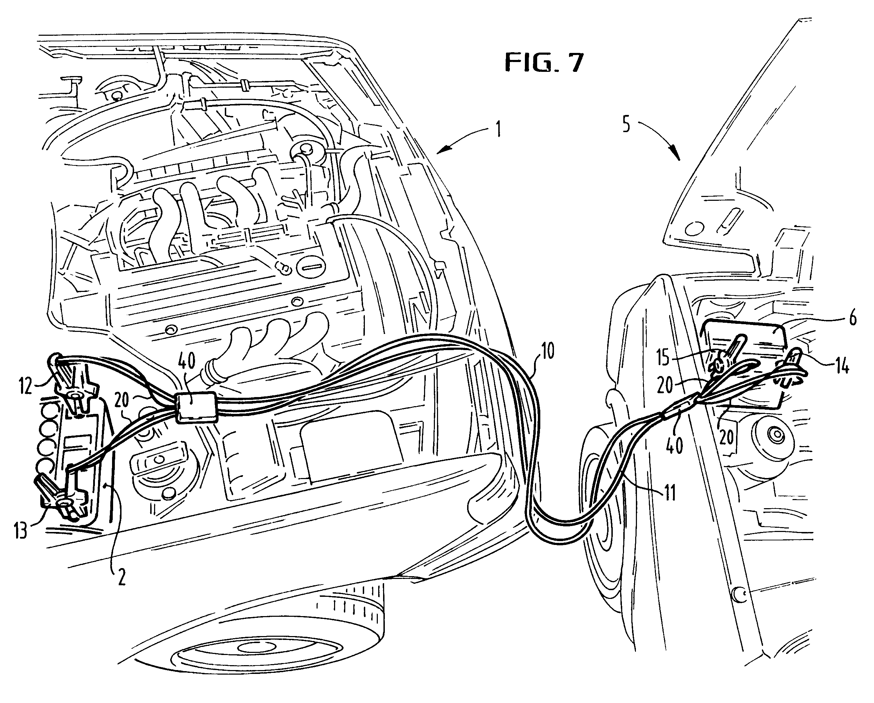

Die Fig. 7 zeigt schematisch die Anwendung eines erfindungsgemäßen Starthilfekabels, die sich praktisch nicht von der Anwendung eines herkömmlichen Starthilfekabels unterscheidet.

Sowohl das eine Fahrzeug 1 mit der Spenderbatterie 2 wie das andere Fahrzeug 5 mit der entladenen Batterie 6 sind lediglich schematisch und ausschnittsweise anhand des Motorraums dargestellt.

Zum Gebrauch des Starthilfekabels wird beispielsweise die eine erste Polklemme 14 am Pluspol der entladenen Batterie 6 und die andere erste Polklemme 12 am Pluspol der Spenderbatterie 2 angeklemmt. Daraufhin wird die andere, zweite Polklemme 13 am Minuspol der Spenderbatterie 2 und danach eine zweite Polklemme 15 am Minuspol oder am Masseband oder an einer anderen blanken Stelle am Motorblock des Fahrzeugs 5 mit der entladenen Batterie 6 angeklemmt. Die beiden ersten Polzangen 12 und 14 sind über die erste Niederspannungsleitung 10 elektrisch leitend miteinander verbunden. Die beiden zweiten Polzangen 13 und 15 sind über die zweite Niederspannungsleitung 11 elektrisch leitend miteinander verbunden. Danach wird der Motor des Spenderfahrzeugs 1 gestartet und auf eine mittlere Drehzahl gebracht. Anschließend wird der Motor des liegengebliebenen Fahrzeugs 5 gestartet. Wenn dessen Motor rundläuft, werden die Polklemmen des Starthilfekabels im umgekehrter Reihenfolge abgeklemmt.

Im Unterschied zu einem herkömmlichen Starthilfekabel ist zusätzlich je eine dritte Leitung 20 vorhanden, welche die eine erste Polzange 12 mit der benachbarten zweiten Polzange 13 bzw. die andere erste Polzange 14 mit der benachbarten zweiten Polzange 15 elektrisch leitend verbindet. In jede dritte Leitung 20 ist je eine elektrisch parallel geschaltete - nicht dargestellte - Anordnung eines Metallvaristors und eines gasgefüllten Überspannungsableiters eingesetzt, die sich innerhalb der beiden Gehäuse 40 befinden.

**Patentansprüche**

1.  Ein Starthilfekabel
    mit einer ersten elektrisch isolierten, flexiblen Niederspannungsleitung (10), deren beide Endabschnitte mit je einer ersten, elektrisch isolierten Polzange (12,14) elektrisch leitend verbunden sind, und
    mit einer zweiten, elektrisch isolierten, flexiblen Niederspannungsleitung (11), deren beide Endabschnitte mit je einer zweiten, elektrisch isolierten Polzange (13,15) elektrisch leitend verbunden sind,

dadurch gekennzeichnet, daß
wenigstens eine elektrisch leitende Verbindung (20) zwischen der ersten Niederspannungsleitung (10) und der zweiten Niederspannungsleitung (11) und/oder zwischen deren ersten Polzangen (12,14) und deren zweiten Polzangen (13,15) vorhanden ist; und in diese elektrisch leitende Verbindung (20) wenigstens ein spannungsabhängiger Widerstand (30) eingesetzt ist, dessen Durchlaßspannung oberhalb der Betriebsspannung herkömmlicher Starterbatterien für Kraftfahrzeuge liegt.

2.  Das Starthilfekabel nach Anspruch 1,
    dadurch gekennzeichnet, daß
    die elektrisch leitende Verbindung eine dritte, elektrisch isolierte, flexible Leitung (20) ist.

3.  Das Starthilfekabel nach Anspruch 2,
    dadurch gekennzeichnet, daß
    zwei dritte Leitungen (20) vorhanden sind, die jeweils eng benachbart zu den ersten und zweiten Polzangen (12,14; 13,15) mit der ersten und zweiten Niederspannungsleitung (10,11) verbunden sind.

4.  Das Starthilfekabel nach Anspruch 2,
    dadurch gekennzeichnet, daß
    zwei dritte Leitungen (20) vorhanden sind, die jeweils mit einer ersten Polzange (12,14) und mit einer zweiten Polzange (13,15) verbunden sind.

5.  Das Starthilfekabel nach einem der Ansprüche 2 bis 4,
    dadurch gekennzeichnet, daß
    jede dritte Leitung einen Leiterquerschnitt von 2 bis 8 mm$^2$ aufweist.

6.  Das Starthilfekabel nach einem der Ansprüche 2 bis 5,
    dadurch gekennzeichnet, daß
    jede dritte Leitung eine Länge von etwa 60 bis 100 cm aufweist.

7.  Das Starthilfekabel nach einem der Ansprüche 2 bis 6,
    dadurch gekennzeichnet, daß
    jeder spannunsabhängige Widerstand (30,35) sowie die Anschlußkontakte (23,27) der dritten Leitung(en) (20) auf einer Leiterplatte, einer Montagehilfe oder einem sonstigen Träger fest angebracht sind, der/die sich in einer dichten Umhüllung bzw. einem Gehäuse (40) aus Kunststoff befindet.

8.  Das Starthilfekabel nach Anspruch 1,
    dadurch gekennzeichnet, daß

die elektrisch leitende Verbindung jeweils aus den beiden Anschlußabschnitten (21 und 25) besteht, über welche der spannungsabhängige Widerstand (30,35) einerseits mit der ersten Niederspannungsleitung (10) und andererseits mit der zweiten Niederspannungsleitung (11) elektrisch leitend verbunden ist.

9. Das Starthilfekabel nach Anspruch 8,
dadurch gekennzeichnet, daß
die beiden Anschlußabschnitte (21 und 25) als Leiterbahnabschnitte auf einer Leiterplatte, als Kontakt einer Schneidklemmvorrichtung, als Kontaktstift oder als sonstiges Kontaktelement ausgebildet sind.

10. Das Starthilfekabel nach Anspruch 8 oder 9,
dadurch gekennzeichnet, daß
die beiden Anschlußabschnitte (21 und 25) sich innerhalb eines Gehäuses (40) befinden, das in einem Abstand von etwa 40 bis 60 cm zu den Polzangen (12 und 13 bzw. 14 und 15) an den Niederspannungsleitungen (10,11) befestigt ist und beide Niederspannungsleitungen (10,11) umgreift.

11. Das Starthilfekabel nach einem der Ansprüche 1 bis 10,
dadurch gekennzeichnet, daß
die Durchlaßspannung des spannungsabhängigen Widerstandes (30) wenigstens ca. 20 bis 60 Volt oberhalb der Betriebsspannung herkömmlicher Starterbatterien für Kraftfahrzeuge liegt.

12. Das Starthilfekabel nach einem der Ansprüche 1 bis 11,
dadurch gekennzeichnet, daß
in jede elektrisch leitende Verbindung (20) zwei parallel geschaltete, spannungsabhängige Widerstände (30,35) eingesetzt sind, die unterschiedliche Durchlaßspannungen aufweisen.

13. Das Starthilfekabel nach einem der Ansprüche 1 bis 12,
dadurch gekennzeichnet, daß
in jede elektrisch leitende Verbindung (20) wenigstens ein spannungsabhängiger Widerstand (30) oder eine analog wirkende Anordnung von Schaltungselementen eingesetzt ist, der/die eine Durchlaßspannung von etwa 40 bis 60 Volt aufweist.

14. Das Starthilfekabel nach Anspruch 12 oder 13,
dadurch gekennzeichnet, daß
der eine spannungsabhängige Widerstand ein gasgefüllter Überspannungsableiter (35) ist.

15. Das Starthilfekabel nach Anspruch 14,
dadurch gekennzeichnet, daß
der gasgefüllte Überspannungsableiter (35) eine Durchlaßspannung von wenigstens 90 Volt aufweist.

16. Das Starthilfekabel nach einem der Ansprüche 12 bis 15,
dadurch gekennzeichnet, daß
der andere spannungsabhängige Widerstand (30) ein Varistor, insbesondere ein Metalloxid-Varistor, ist.

17. Das Starthilfekabel nach einem der Ansprüche 12 bis 15,
dadurch gekennzeichnet, daß
der andere spannungsabhängige Widerstand (30) eine Anordnung von zwei antiparallel geschalteten Z-Dioden ist.

18. Das Starthilfekabel nach einem der Ansprüche 12 bis 15,
dadurch gekennzeichnet, daß
der andere spannungsabhängige Widerstand (30) ein Thyristor ist.

19. Das Starthilfekabel nach Anspruch 18,
dadurch gekennzeichnet, daß
der andere spannungsabhängige Widerstand (30) eine Anordnung mit zwei antiparallel geschalteten Thyristoren (Triac) ist.

20. Das Starthilfekabel nach einem der Ansprüche 1 bis 19,
dadurch gekennzeichnet, daß
jeder spannungsabhängige Widerstand (30,35) benachbart zu einer Kühlklemme oder einem sonstigen Wärmeableiter angeordnet ist.

21. Das Starthilfekabel nach einem der Ansprüche 1 bis 10,
dadurch gekennzeichnet, daß
zwei dritte, elektrisch isolierte, flexible Leitungen (20) vorhanden sind, die beide - benachbart zu den jeweiligen endständigen Polzangen (12 und 13 bzw. 14 und 15) elektrisch leitend mit der ersten Niederspannungsleitung (10) und mit der zweiten Niederspannungsleitung (11) oder mit deren ersten und zweiten Polzangen (12 und 13 bzw. 14 und 15) verbunden sind; und in jede dritte Leitung (20) eine parallel geschaltete Anordnung eines Metallvaristors (30) und eines gasgefüllten Überspannungsableiters (35) eingesetzt ist.

**Claims**

1. A battery jumper cable comprising

a first electrically insulated flexible low-voltage conductor (10) having both end portions thereof electrically connected to a first pair of electrically insulated pole pliers (12, 14), and

a second electrically insulated flexible low-voltage conductor (11) having both end portions thereof electrically connected to a second pair of electrically insulated pole pliers (13, 15), characterized in that

at least one electrically conductive connection (20) is provided between the first low-voltage conductor (10) and the second low-voltage conductor (11) and/or between the first pair of pole pliers (12, 14) and the second pair of pole pliers (13, 15); and

that at least one voltage-dependent resistor (30) is disposed in said electrical connection (20), the forward voltage of said resistor (30) exceeding the operating voltage of conventional starting batteries for motor vehicles.

2.  The battery jumper cable according to claim 1, characterized in that

the electrical connection comprises a third electrically insulated flexible conductor (20).

3.  The battery jumper cable according to claim 2, characterized in that

two third conductors (20) are provided each being connected to the first low-voltage conductor (10) and to the second low-voltage conductor (11) in close proximity to the first and second pole pliers (12, 14; 13, 15).

4.  The battery jumper cable according to claim 2, characterized in that

two third conductors (20) are provided each being connected to the first pole pliers (12, 14) and to the second pole pliers (13, 15).

5.  The battery jumper cable according to anyone of the claims 2 to 4, characterized in that

each third conductor comprises a conductor cross-section area in the range of 2 to 8 mm$^2$.

6.  The battery jumper cable according to anyone of the claims 2 to 5, characterized in that

each third conductor comprises a length of about 60 to 100 cm.

7.  The battery jumper cable according to anyone of the claims 2 to 6, characterized in that

each voltage-dependent resistor (30, 35) and the terminals (23, 27) of the third conductor(s) (20) are secured on a p.c. board, an auxiliary mounting means or on another substrate which is disposed in an hermetic enclosure or housing (40) made of plastic material.

8.  The battery jumper cable according to claim 1, characterized in that

each of the electrical connection consists of the two connecting sections (21 and 25) connecting the voltage-dependent resistor (30, 35) to the first low-voltage conductor (10), on the one hand, and to the second low-voltage conductor (11), on the other hand.

9.  The battery jumper cable according to claim 8, characterized in that

the two connecting sections (21 and 25) are formed as conductive track sections on a p.c. board or as contacts of an insulation-piercing connector or as connector pins or other connection elements.

10. The battery jumper cable according to claim 8 or claim 9, characterized in that

the two connecting sections (21 and 25) are disposed within a housing (40) secured to the low-voltage conductors (10, 11) at a distance of about 40 to 60 cm from the pairs of pole pliers (12 and 13 or 14 and 15, respectively) and arranged in overlapping engagement about both low-voltage conductors (10, 11).

11. The battery jumper cable according to anyone of the claims 1 to 10, characterized in that

the forward voltage of the voltage-dependent resistor (30) exceeds the operating voltage of conventional starting batteries for motor vehicles by at least about 20 to 60 V.

12. The battery jumper cable according to anyone of the claims 1 to 11, characterized in that

each electrical connection (20) has disposed therein two parallel-connected voltage-dependent resistors (30, 35) comprising different forward voltages.

13. The battery jumper cable according to anyone of the claims 1 to 12, characterized in that

each electrical connection (20) has disposed therein at least one voltage-dependent resistor (30) or an analogously acting array of circuit elements exhibiting a forward voltage of about 40 to 60 V.

14. The battery jumper cable according to claim 12 or claim 13,
characterized in that
one of said voltage-dependent resistors is a gas-filled surge arrester (35).

15. The battery jumper cable according to claim 14,
characterized in that
the gas-filled surge arrester (35) comprises a forward voltage of at least 90 V.

16. The battery jumper cable according to anyone of the claims 12 to 15,
characterized in that
the other voltage-dependent resistor (30) comprises a varistor, especially a metal oxide varistor.

17. The battery jumper cable according to anyone of the claims 12 to 15,
characterized in that
the other voltage-dependent resistor (30) comprises an array of two anti-parallel connected Z-diodes.

18. The battery jumper cable according to anyone of the claims 12 to 15,
characterized in that
the other voltage-dependent resistor (30) is a thyristor.

19. The battery jumper cable according to claim 18,
characterized in that
the other voltage-dependent resistor (30) comprises an array of two anti-parallel connected thyristors (Triac).

20. The battery jumper cable according to anyone of the claims 1 to 19,
characterized in that each voltage-dependent resistor (30, 35) is disposed adjacent a heat-dissipating terminal or another heat sink.

21. The battery jumper cable according to anyone of the claims 1 to 10,
characterized in that
two electrically insulated flexible third conductors (20) are provided, both of which are electrically connected - adjacent the respective remote pairs of pole pliers (12 and 13 or 14 and 15, respectively) - to the first low-voltage conductor (10) and the second low-voltage conductor (11) or to the pairs of first and second pole pliers (12 and 13 or 14 and 15, respectively); and
that each third conductor (20) has disposed therein a parallel-connected arrangement of a metal oxide varistor (30) and a gas-filled surge arrester (35).

**Revendications**

1. Un câble pour l'aide au démarrage comprenant un premier conducteur de basse tension flexible isolé électriquement (10), dont les deux extrémités sont connectées chacune à une première pince polaire électriquement isolée et électriquement conductrice (12, 14) et un deuxième conducteur de basse tension (11) flexible isolé électriquement dont les deux extrémités sont connectées chacune à une deuxième pince polaire électriquement isolée et électriquement conductrice (13, 15),
caractérisé en ce qu'
il y a au moins une connexion électriquement conductrice (20) entre le premier conducteur de basse tension (10) et le deuxième conducteur de basse tension (11) et/ou entre leurs premières pinces polaires (12, 14) et leurs deuxièmes pinces polaires (13, 15); et en ce qu'au moins une résistance dépendant du voltage (30) est placée dans cette connexion électriquement conductrice (20), la tension directe de la résistance étant supérieure à la tension de régime de batteries démarreurs conventionnelles pour véhicules automobiles.

2. Le câble pour l'aide au démarrage suivant la revendication 1,
caractérisé en ce que
la connexion électriquement conductrice est un troisième conducteur flexible et électriquement isolé (20).

3. Le câble pour l'aide au démarrage suivant la revendication 2,
caractérisé en ce qu'
il y a deux troisièmes conducteurs, qui sont connectés au premier et au deuxième conducteur de basse tension (10, 11) de manière très adjacente aux premières et deuxièmes pinces polaires (12, 14; 13, 15).

4. Le câble pour l'aide au démarrage suivant la revendication 2,
caractérisé en ce qu'
il y a deux troisièmes conducteurs (20), qui sont connectés chacun avec une première pince polaire (12, 14) et une deuxième pince polaire (13, 15).

5. Le câble pour l'aide au démarrage selon l'une des revendications 2 à 4,
caractérisé en ce que
chaque troisième conducteur présente une section de conducteur de 2 à 8 mm².

6. Le câble pour l'aide au démarrage selon l'une des revendications 2 à 5, caractérisé en ce que chaque troisième conducteur présente une longueur d'environ 60 à 100 cm.

7. Le câble pour l'aide au démarrage selon l'une des revendications 2 à 6, caractérisé en ce que chaque résistance dépendant du voltage (30, 35) ainsi que les contacts de connexion (23, 27) des troisièmes conducteurs (20) sont montés de manière solidaire sur une plaquette à circuits imprimés, sur un moyen d'aide au montage ou sur un autre porteur, qui se trouve dans une enveloppe ou un boîtier étanche (40) en matière plastique.

8. Le câble pour l'aide au démarrage suivant la revendication 1, caractérisé en ce que la connexion électriquement conductrice consiste respectivement des deux sections de connexion (21 et 25) par lesquelles la résistance dépendant du voltage (30, 35) est connectée de manière électriquement conductrice d'une part à un premier conducteur de basse tension (10) et d'autre part à un deuxième conducteur de basse tension (11).

9. Le câble pour l'aide au démarrage suivant la revendication 8, caractérisé en ce que les deux sections de connexion (21 et 25) sont conçues sous forme de sections de piste conductive, de contact d'un raccord par déplacement d'isolation, de fiche de contact ou d'un autre élément de contact.

10. Le câble pour l'aide au démarrage suivant la revendication 8 ou 9, caractérisé en ce que les deux sections de connexion (21 et 25) se trouvent à l'intérieur d'un boîtier (40) qui est fixé sur les conducteurs de basse tension (10, 11) à une distance d'environ 40 à 60 cm par rapport aux pinces polaires (12 et 13, respectivement 14 et 15) et qu'elles entourent les deux conducteurs de basse tension (10, 11).

11. Le câble pour l'aide au démarrage selon l'une des revendications 1 à 10, caractérisé en ce que la tension directe de la résistance dépendant du voltage (30) est d'au moins 20 à 60 Volt supérieure à la tension de régime de batteries démarreurs conventionnelles pour véhicules automobiles.

12. Le câble pour l'aide au démarrage selon l'une des revendications 1 à 11, caractérisé en ce que deux résistances dépendant du voltage connectées en parallèle (30, 35) dont les tensions directes sont différentes, sont agencées dans chaque connexion électriquement conductrice (20).

13. Le câble pour l'aide au démarrage selon l'une des revendications 1 à 12, caractérisé en ce qu' au moins une résistance dépendant du voltage (30) ou un arrangement d'éléments de circuit agissant de manière analogue, dont la tension directe est d'environ 40 à 60 Volt, est agencé dans chaque connexion électriquement conductrice (20).

14. Le câble pour l'aide au démarrage suivant la revendication 12 ou 13, caractérisé en ce que la résistance dépendant du voltage est un parasurtension (35) rempli de gaz.

15. Le câble pour l'aide au démarrage suivant la revendication 14, caractérisé en ce que le parasurtension (35) rempli de gaz présente une tension directe d'au moins 90 Volt.

16. Le câble pour l'aide au démarrage selon l'une des revendications 12 à 15, caractérisé en ce que l'autre résistance dépendant du voltage (30) est une varistance, notamment une varistance en oxyde métallique.

17. Le câble pour l'aide au démarrage selon l'une des revendications 12 à 15, caractérisé en ce que l'autre résistance dépendant du voltage (30) est un arrangement de deux diodes de Zener connectées en antiparallèle.

18. Le câble pour l'aide au démarrage selon l'une des revendications 12 à 15, caractérisé en ce que l'autre résistance dépendant du voltage (30) est un thyristor.

19. Le câble pour l'aide au démarrage selon l'une des revendications 12 à 15, caractérisé en ce que l'autre résistance dépendant du voltage (30) est un arrangement de deux thyristors connectés en antiparallèle (triac).

20. Le câble pour l'aide au démarrage selon l'une des revendications 12 à 15, caractérisé en ce que chaque résistance dépendant du voltage (30, 35) est agencée de manière adjacente à une borne de refroidissement ou un autre moyen dissipant la chaleur.

21. Le câble pour l'aide au démarrage selon l'une des revendications 1 à 10, caractérisé en ce qu' il y a deux troisièmes conducteurs flexibles isolés électriquement (20) qui sont tous les deux connectés de manière adjacente aux pinces polaires correspondantes terminales (12 et 13, respectivement 14 et 15) et électriquement isolée, au premier conducteur de basse tension flexible (10) ou au deuxième conducteur de basse tension flexible (11) ou à leurs premières et deuxièmes pinces polaires (12 et 13 respectivement 14 et 15); et qu'un arrangement d'un varistor métallique connecté en parallèle (30) et un parasurtension rempli de gaz (35) est placé dans chaque troisième conducteur (20).

FIG. 1

FIG. 2

FIG. 3

FIG. 4

FIG. 5

# FIG. 6

FIG. 7

EP 0 258 776 B1